# EUROPEAN PATENT APPLICATION

(11) **EP 2 357 084 A1**
(43) Date of publication of application: **17.08.2011**
(21) Application number: 11152922.8
(22) Date of filing: 01.02.2011
(51) Int. Cl.: B41F 23/04, B41F 5/04, C09D 11/00, B41F 5/24

(54) **Printing system having a raised image printing cylinder**

(30) Priority: 11.02.2010 US 704451
(71) Applicant: IdeON LLC, Hillsborough, NJ 08844 (US)
(72) Inventor: Laksin, Mikhail, Boonton, NJ 07075 (US)
(74) Representative: Raffay & Fleck

(57) **Abstract**

A printing arrangement having a rotatable printing cylinder and raised image and non-raised non-image portions on the circumference of the printing cylinder. The arrangement has an array of smooth rollers for applying an ink onto the image on the printing cylinder and not applying ink onto the non-image portion. A first smooth roller is mounted for rotation near the printing cylinder and a second smooth roller mounted for rotation near the first roller forming an ink gap between the two smooth rollers. Ink is dispersed across the first smooth roller and applied onto the image on the printing cylinder. The arrangement has a rotatable counter pressure cylinder mounted with the printing cylinder such that when a web is passed through a gap between the printing and counter pressure cylinders, and when ink applied to the image portion on the printing cylinder, ink is transferred from the image onto the substrate material.

## Description

### BACKGROUND OF THE INVENTION

### Field of the Invention

The present invention relates to printing systems. More particularly, the invention pertains to a printing arrangement wherein a viscous ink is sequentially applied from an array of smooth rollers onto a raised image on a rotatable printing cylinder and then transferred onto a moving web of a substrate material.

### Description of the Related Art

Currently two distinctly different types of inks are used in printing, namely liquid inks having a viscosity of less than about 4000 cps and paste inks having viscosity of more than 4000 cps. Transfer of liquid inks requires pumping and circulation and metering ink layers via engraved cylinders (gravure printing) or anilox rollers (flexographic printing). Printing with higher viscosity ink is beneficial in many situations. Paste inks generally have much higher color intensity which allows significantly enhanced fidelity of print by printing with much thinner, .5 to 2 micron film layers while achieving high optical density of the printed colors. High viscosity paste inks can be more economical due to much lower ink consumption per print area. Transfer of paste inks through an inking system is more complicated than for liquid inks. A typical high speed lithographic press uses 15-20 and in some cases more rollers for transferring a paste ink from the ink fountain to the printing plate. This large number of rollers is required for gradual thinning of the ink layer down to several micron thickness on the last, "form" roller(s) that comes in contact with the lithographic plate. As a result, typical litho inking unit is a fairly large mechanism with a significant number of mechanical gears and complex drives. A large total roller surface area and excessively high ink thickness at the beginning of the transfer path, starting from the ink fountain is a key reason for excessive ink misting at high press speeds. This misting often creates unhealthy air conditions around the printing press.

It is known that a simple two roller system with a controlled gap between rollers can be used for applying high viscosity adhesives onto webs of plastic or paper for lamination purposes. U.S. patent application 2005/0274273 shows a waterless planographic printing system wherein a printing cylinder uses a printing blanket such that the image to be printed is flat rather than raised. U.S. patent 7,021,209 shows a device for adjusting the contact pressure of an adjustably seated roller in web-fed rotary printing presses. There is no teaching of an image being raised from the outermost circumference of the printing cylinder. U.S. patent 6,279,472 shows an inker unit for a printing unit of a web-fed rotary printing press. This is a wet or dry offset process with no teaching of a raised image. U.S. patent 6,571,710 shows a printing press having a keyless inking system. Ink is transferred to a printing plate rather than a raised image on a printing cylinder. U.S. patent 5,671,678 shows a letterpress printing method requiring an application roller having a pattern roller cell pattern with a cell depth of ≤15µm. U.S. patent 7,421,948 shows a method and device for adjustment of the transfer of printing ink. Ink is transported via ink transferring surface recesses. Planographic printing rather than raised image printing is used. According to this invention a simplified system, comprising three or four or more smooth rollers with controlled intermediate gap, and preferably individual electrical drives for speed control and temperature control, combined with a raised image printing plate cylinder can be used as a very effective inking unit for high viscosity printing ink transfer. The ink thickness is reduced to just several microns with the first rotation of the cylinder. This eliminates ink misting. Print density is controlled by the speed and temperature of the rollers. Additional smooth rollers may be employed for enhanced uniformity of the ink layer across the web.

### SUMMARY OF THE INVENTION

The invention provides a printing arrangement comprising:
a) a rotatable printing cylinder having an outermost circumference; an image portion and a non-image portion on and around the outermost circumference of the printing cylinder, the image portion being raised from the outermost circumference of the printing cylinder at a level higher than the level of the non-image portion;
b) an array of rollers for applying an ink onto the image portion on the printing cylinder while substantially not applying ink onto the non-image portion; the array of rollers comprising a first smooth roller mounted for rotation in juxtaposition with the printing cylinder and a second smooth roller mounted for rotation in juxtaposition with the first smooth roller; the first smooth roller and the second smooth roller being arranged such that when an ink is positioned in a gap between the first smooth roller and the second smooth roller, the ink is substantially uniformly dispersed across an outermost circumferential surface of the first smooth roller and said ink is thereafter applied from the outermost circumferential surface of the first smooth roller onto the image portion on the printing cylinder;
c) a rotatable counter pressure cylinder mounted in juxtaposition with the printing cylinder such that when a web of a substrate material is passed through a gap between the printing cylinder and the counter pressure cylinder, and when ink has been applied to the image portion on the printing cylinder from the first smooth roller, such ink is transferred from the image portion onto the substrate material.

The invention also provides a method for imagewise printing an ink onto a moving web of a substrate material comprising:
I) providing a printing arrangement comprising:
   a) a rotatable printing cylinder having an outermost circumference; an image portion and a non-image portion on and around the outermost circumference of the printing cylinder, the image portion being raised from the outermost circumference of the printing cylinder at a level higher than the level of the non-image portion;
   b) an array of rollers for applying an ink onto the image portion on the printing cylinder while substantially not applying ink onto the non-image portion; the array of rollers comprising a first smooth roller mounted for rotation in juxtaposition with the printing cylinder and a second smooth roller mounted for rotation in juxtaposition with the first smooth roller; the first smooth roller and the second smooth roller being arranged such that when an ink is positioned in a gap between the first smooth roller and the second smooth roller, the ink is substantially uniformly dispersed across an outermost circumferential surface of the first smooth roller and said ink is thereafter applied from the outermost circumferential surface of the first smooth roller onto the image portion on the printing cylinder;
   c) a rotatable counter pressure cylinder mounted in juxtaposition with the printing cylinder such that when a web of a substrate material is passed through a gap between the printing cylinder and the counter pressure cylinder, and when ink has been applied to the image portion on the printing cylinder from the first smooth roller, such ink is transferred from the image portion onto the substrate material;
II) positioning an ink positioned in a gap between the first smooth roller and the second smooth roller;
III) passing a moving web of a substrate material through a gap between the printing cylinder and the counter pressure cylinder thereby transferring the ink from the image portion onto the substrate material.

### BRIEF DESCRIPTION OF THE DRAWINGS

Fig. 1 shows one embodiment of a printing arrangement according to the invention including a rotatable printing cylinder, a moving web, an array of two smooth rollers, and a rotatable counter pressure cylinder.
Fig. 2 shows another embodiment of a printing arrangement according to the invention including a rotatable printing cylinder, a moving web, an array of three smooth rollers, and a rotatable counter pressure cylinder.
Fig. 3 shows another embodiment of a printing arrangement according to the invention including two rotatable printing cylinders, a moving web, two arrays of two smooth rollers, and a rotatable counter pressure cylinder.
Fig. 4 shows another embodiment of a printing arrangement according to the invention including a rotatable printing cylinder, a moving web, an array of three smooth rollers, a resilient roller positioned between two of the smooth rollers, and a rotatable counter pressure cylinder.

### DESCRIPTION OF THE INVENTION

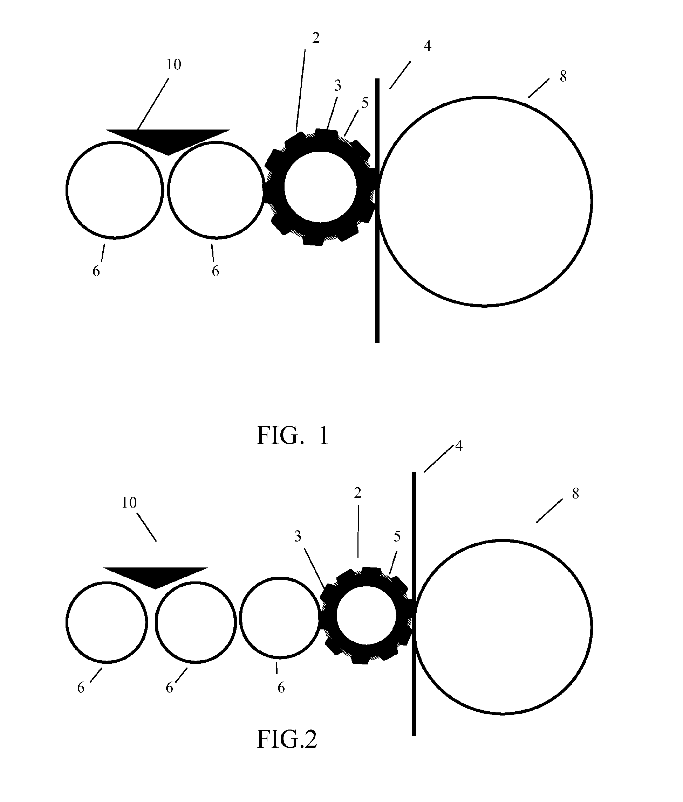

Fig. 1 shows one embodiment of a printing arrangement according to the invention including a rotatable printing cylinder 2, a moving web 4, an array of smooth rollers 6, and a rotatable counter pressure cylinder 8. In this embodiment, an ink 10 is positioned between two smooth rollers 6. Smooth rollers 6 have a controlled intermediate gap, into which gap a viscous ink is applied. The ink 10 is evenly distributed around the smooth rollers 6. The smooth rollers can be made of any convenient hard, essentially non-resilient material such as stainless steel. In one embodiment of the invention the smooth rollers have an even level surface around their entire circumference. In another embodiment of the invention, one or more of the smooth rollers is an anilox or engraved roller. An anilox roll is a hard cylinder, usually constructed of a steel or aluminum core which is coated by an industrial ceramic whose surface contains millions of very fine dimples or cells. A thick layer of viscous ink is deposited on the anilox roller. Optionally, a razor-sharp 'doctor blade' is used to scrape excess ink from the surface leaving just the measured amount of ink in the cells. In one embodiment, the smooth roller 6 immediately adjacent to the then rotates to the rotatable printing cylinder 2 contacts the rotatable printing cylinder 2 which receives the ink from the cells for transfer to a web of a substrate material 4 as described below.

The ink has a viscous, pasty consistency, and may be cured by ultraviolet radiation, electron beam radiation, or it may be a heat drying ink. Electron beam curable ink compositions are well known in the art. In general these comprise a colorant and an ethylenically unsaturated compound, which has one or more double bonds, preferably two or more double bonds.

Useful ethylenically unsaturated compounds non-exclusively include an ethylenically unsaturated monomer, ethylenically unsaturated oligomer or ethylenically unsaturated polymer. Preferred ethylenically unsaturated compounds non-exclusively include an acrylate, a methacrylate, , a vinyl compound, a, or combinations thereof. These include epoxy acrylates or methacrylates, polyether acrylates or methacrylates, polyurethane acrylates or methacrylates, polyester acrylates or methacrylates, ethoxylated or propoxylated di- or multi-functional acrylates or methacrylates. Among the materials which may be used are polyfunctional terminally unsaturated organic compounds including the polyesters of ethylenically unsaturated acids such as acrylic acid and methacrylic acid and a polyhydric alcohol. Examples of some of these polyfunctional compounds are the polyacrylates and polymethacrylates of trimethylolpropane, pentaerythritol, dipentaerythritol, ethylene glycol, triethylene glycol, propylene glycol, glycerin, sorbitol, neopentylglycol, 1,6-hexanediol and hydroxy-terminated polyesters, hydroxy-terminated epoxy resins, and hydroxy-terminated polyurethanes. Also included in this group of terminally unsaturated organic compounds are polyallyl and polyvinyl compounds such as diallyl phthalate and tetraallyloxyethane and divinyl adipate, butane divinyl ether and divinylbenzene. These may be further exemplified as acrylates of primary or polyhydric alcohol or oligoacrylates such as methyl acrylate, ethyl acrylate, propyl acrylate, butyl acrylate, hydroxyethyl acrylate, 2-ethylhexyl acrylate, ethylene glycol diacrylate, trimethylolpropane triacrylate, pentaerythritol triacrylate, epoxy acrylates, oligoester acrylates, urethane acrylates or the like. They may further be exemplified as methacrylates of primary or polyhydric alcohol such as methyl methacrylate, ethyl methacrylate, propyl methacrylate, butyl methacrylate, hydroxyethyl methacrylate, 2-ethylhexyl methacrylate, diethylene glycol dimethacrylate, trimethylolpropane trimethacrylate or the like, or allyl alcohol, diallyl ether, diallyl adipate, diallyl phthalate, both end diallylates of low molecular weight polyurethane or the like.

In one embodiment, the ethylenically unsaturated compound may be present in an ink composition in an amount of from about 55 to about 95 weight percent based on the weigh of the overall ink composition. In another embodiment, the ethylenically unsaturated compound may be present in an ink composition in an amount of from about 40 to about 80 weight percent based on the weight of the overall ink composition.

The ink composition then comprises at least one colorant which can be a pigment or a dye, although pigments are preferred. Pigments can be an organic pigment, an inorganic pigment, a metallic pigment, an electrically conductive pigment, a magnetically active pigment, a nanopigment, a dielectric pigment, or combinations thereof.

As the colorant, any suitable dye or pigment may be used without limitation so long as the colorant is dispersible with the ethylenically unsaturated compound. Examples of suitable pigments include Violet Toner VT-8015 (Paul Uhlich); Paliogen Violet 5100 (BASF); Paliogen Violet 5890 (BASF); Permanent Violet VT 2645 (Paul Uhlich); Heliogen Green L8730 (BASF); Argyle Green XP111-S (Paul Uhlich); Brilliant Green Toner GR 0991 (Paul Uhlich); Lithol Scarlet D3700 (BASF); Solvent Red 49; Pigment red 57:1; Toluidine Red (Aldrich); Scarlet for Thermoplast NSD PS PA (Ugine Kuhlmann of Canada); E.D. Toluidine Red (Aldrich); Lithol Rubine Toner (Paul Uhlich); Lithol Scarlet 4440 (BASF); Bon Red C (Dominion Color Company); Royal Brilliant Red RD-8192 (Paul Uhlich); Oracet Pink RF (Ciba-Geigy); Paliogen Red 3871K (BASF); Paliogen Red 3340 (BASF); Lithol Fast Scarlet L4300 (BASF); Solvent Blue 808; Heliogen Blue L6900, L7020 (BASF); Heliogen Blue K6902, K6910 (BASF); Heliogen Blue D6840, D7080 (BASF); Sudan Blue OS (BASF); Neopen Blue FF4012 (BASF); PV Fast Blue B2G01 (American Hoechst); Irgalite Blue BCA or Irgalite Blue NGA (Ciba-Geigy); Paliogen Blue 6470 (BASF); Sudan II (Red Orange) (Matheson, Colemen Bell); Sudan II (Orange) (Matheson, Colemen Bell); Sudan Orange G (Aldrich), Sudan Orange 220 (BASF); Paliogen Orange 3040 (BASF); Ortho Orange OR 2673 (Paul Uhlich); Solvent Yellow 162; Paliogen Yellow 152, 1560 (BASF); Lithol Fast Yellow 0991 K (BASF); Paliotol Yellow 1840 (BASF); Novopern Yellow FGL (Hoechst); Permanent Yellow YE 0305 (Paul Uhlich); Lumogen Yellow D0790 (BASF); Suco-Yellow L1250 (BASF); Suco-Yellow D1355 (BASF); Suco Fast Yellow D1355, D1351 (BASF); Hansa bril yellow SGX 03(B); Hostaperm Pink E; Fanal Pink D4830 (BASF); Cinquasia Magenta (Du Pont); Paliogen Black L0084 (BASF); Pigment Black K801 (BASF); and carbon blacks such as REGAL 330..RTM.. (Cabot), Carbon Black 5250, Carbon Black 5750 (Columbia Chemical), and the like. Examples of suitable dyes also include Pontomine; Food Black 2; Carodirect Turquoise FBL Supra Conc. (Direct Blue 199), available from Carolina Color and Chemical; Special Fast Turquoise 8 GL Liquid (Direct Blue 86), available from Mobay Chemical; Intrabond Liquid Turquoise GLL (Direct Blue 86), available from Crompton and Knowles; Cibracron Brilliant Red 38-A (Reactive Red 4), available from Aldrich Chemical; Drimarene Brilliant Red X-2B (Reactive Red 56), available from Pylam, Inc.; Levafix Brilliant Red E4B, available from Mobay Chemical; Levafix Brilliant Red E6-BA, available from Mobay Chemical; Procion Red H8B (Reactive Red 31), available from ICI America; Pylam Certified D&C Red #28 (Acid Red 92), available from Pylam; Direct Brill Pink B Ground Crude, available from Crompton and Knowles; Cartasol Yellow GTF Presscake, available from Sandoz, Inc.; Tartrazine Extra Conc. (FD&C Yellow #5, Acid Yellow 23), available from Sandoz, Inc.; Carodirect Yellow RL (Direct Yellow 86), available from Carolina Color and Chemical; Cartasol Yellow GTF Uquid Special 110, available from Sandoz, Inc.; D&C Yellow #10 (Acid Yellow 3), available from Tricon; Yellow Shade 16948, available from Tricon; Basocid Black.times.34, available from BASF; Carta Black 2GT, available from Sandoz, Inc.; Neozapon Red 492 (BASF); Orasol Red G (Ciba-Geigy); Direct Brilliant Pink B (Crompton & Knowles); Aizen Spilon Red C-BH (Hodogaya Chemical); Kayanol Red 3BL (Nippon Kayaku); Levanol Brilliant Red 3BW (Mobay Chemical); Levaderm Lemon Yellow (Mobay Chemical); Spirit Fast Yellow 3G; Aizen Spilon Yellow C-GNH (Hodogaya Chemical); Sirius Supra Yellow GD 167; Cartasol Brilliant Yellow 4GF (Sandoz); Pergasol Yellow CGP (Ciba-Geigy); Orasol Black RLP (Ciba-Geigy); Savinyl Black RLS (Sandoz); Dermacarbon 2GT (Sandoz); Pyrozol Black BG (ICI); Morfast Black Conc. A (Morton-Thiokol); Diaazol Black RN Quad (ICI); Orasol Blue GN (Ciba-Geigy); Savinyl Blue GLS (Sandoz); Luxol Blue MBSN (Morton-Thiokol); Sevron Blue 5GMF (ICI); Basacid Blue 750 (BASF), and the like. Neozapon Black X51 [C.I. Solvent Black, C.I. 12195] (BASF), Sudan Blue 670 [C.I. 61554] (BASF), Sudan Yellow 146 [C.I. 12700] (BASF), and Sudan Red 462 [C.I. 260501] (BASF) or combinations thereof. For this invention the term pigment includes a conductive powder such as a metal powder of iron, silver, copper aluminum or their alloys, a metal oxide powder, a metal carbide powder, a metal boride powder, carbon black, graphite or combinations thereof.

Useable dyes include the azo dyes which predominate the yellow, orange, brown and red hues. The violet dyes may come from any of the azo, anthraquinone, xanthene or triarylmethane group containing compounds. Blue and green dyes are predominantly of the anthraquinone and triarylmethane groups although it is also possible to use dyes selected from the azine, thiazine and phthalocyanine groups. Black hued dyes include azine dyes although other azo dyes can be used.

In one embodiment, the colorant may be present in an ink composition in an amount of from about 5 to about 45 weight percent based on the weight of the overall ink composition. In another embodiment, the colorant may be present in an ink composition in an amount of from about 15 to about 20 weight percent based on the weight of the overall ink composition.

The ink composition may optionally comprise one or more additional components of a wax, talc, a surfactant, a rheology modifier, a silica, a silicone, a disbursing aide, or combinations thereof. In one embodiment, the additional components may be present in an ink composition in an amount of from 0 to about 15 weight percent based on the weight of the overall ink composition. In another embodiment, the additional components may be present in an ink composition in an amount of from about 5 to about 10 weight percent based on the weight of the overall ink composition. These optional components may contain an insignificant amount of a solvent, but preferably have zero solvent.

Inks which are ultraviolet radiation curable contain the above ingredients and further comprise a polymerization initiator such as a photoinitiator. The radiation curable ink composition preferably uses a free radical polymerization initiator component which preferably photolytically generates free radicals. Examples of free radical generating components include photoinitiators which themselves photolytically generate free radicals by a fragmentation or Norrish type 1 mechanism. These latter have a carbon-carbonyl bond capable of cleavage at such bond to form two radicals, at least one of which is capable of photoinitiation. Suitable initiators include aromatic ketones such as benzophenone, acrylated benzophenone, 2-ethylanthraquinone, phenanthraquinone, 2-tert-butylanthraquinone, 1,2-benzanthraquinone, 2,3-benzanthraquinone, 2,3-dichloronaphthoquinone, benzyl dimethyl ketal and other aromatic ketones, e.g. benzoin, benzoin ethers such as benzoin methyl ether, benzoin ethyl ether, benzoin isobutyl ether and benzoin phenyl ether, methyl benzoin, ethyl benzoin and other benzoins; diphenyl-2,4,6-trimehtyl benzoylphosphine oxide; bis(pentafluorophenyl)titanocene.

The free radical generating component may comprise a combination of radical generating initiators which generate free radicals by a Norrish type 1 mechanism and a spectral sensitizer.. Such a combination includes 2-methyl-1-[4-(methylthiophenyl]-2-morpholinopropanone available from Ciba Geigy as Irgacure 907 in combination with ethyl Michler's ketone (EMK) which is 4,4'-bisdiethylaminobenzophenone; Irgacure 907 in combination with 2-isopropylthioxanthanone (ITX); benzophenone in combination with EMK; benzophenone in combination with ITX; 2-benzyl-2-N,N-dimethylamino-1-(4-morpholinophenyl)-1-butanone which is available from Ciba-Geigy as Irgacure 369 in combination with EMK; Irgacure 369 in combination with ITX. In such cases, it is preferred that the weight ratio of radical polymerization initiator and spectral sensitizer ranges from about 5:1 to about 1:5. Other free radical polymerization initiators useful for this invention non-exclusively include triazines, such as chlorine radical generators such as 2-substituted-4,6-bis(trihalomethyl)-1,3,5-triazines. The foregoing substitution is with a chromophore group that imparts spectral sensitivity to the triazine to a portion of the electromagnetic radiation spectrum. Non-exclusive examples of these radical generators include 2-(4-methoxynaphth-1-yl)-4,6-bis(trichloromethyl)-1,3,5,-triazine which is available commercially from PCAS, Longjumeau Cedex (France) as Triazine B; 2-(4-methylthiophenyl)-4,6-bis(trichloromethyl)-1,3,5,-triazine; 2-(4-methoxystyryl)-4,6-bis(trichloromethyl)-1,3,5-triazine; 2-(4-diethylaminophenyl-1,3-butadienyl)-4,6-bis(trichloromethyl)-1,3,5-tri azine, among others. Also useful for the invention are Norrish type II mechanism compounds such as combinations of thioxanthones such as ITX and a source of abstractable hydrogen such as triethanolamine. In addition to the compounds identified above useful free radical photoinitiators include hexyltriaryl borates, camphorquinone, dimethoxy-2-phenylacetophenone (IRGACURE 651); 2-benzyl-2-N,N-dimethylamino-1-(4-morpholinophenyl)-1-butanone (IRGACURE 369); and 2-hydroxy-2-methyl-1-phenyl-propane-1-one (DAROCURE 1173), as well as the photoinitiators disclosed in U.S. Pat. No. 4,820,744, particularly at line 43, column 4, through line 7, column 7 (which disclosure is incorporated hereinto by reference thereto). Suitable alternative UV/visible photoinitiators include DAROCUR 4265, which is a 50 percent solution of 2,4,5-trimethyl benzoyl diphenyl-phosphine oxide in DAROCUR 1173, and IRGACURE 819, phosphine oxide, phenyl-bis(2,4,6-trimethyl) benzoyl; TPO (2,4,5-trimethyl(benzoyl)diphenylphosphine oxides); DAROCUR 1173 (HMPP) (2-hydroxymethyl-1-phenyl propanone); IRGACURE 184 (HCPK) (1-hydroxycyclohexyl phenyl ketone); IRGACURE 651 (BDK) (benzildimethyl ketal, or 2,2 dimethoxyl-2-phenylacetophenone); an equal parts mixture of benzophenone and BM611 (N-3-dimethylaminopropyl methacrylamide); an equal parts mixture of DAROCUR 1173 and ITX (isopropyl thioxanthone [mixture of 2 and 4 isomers]; IRGACURE 369 (2-benzyl-2-N,N-dimethylamino-1-(4-morpholinophenyl)-1 butanone); IRGACURE 907 (2-methyl-1-[4-(methylthiophenyl]-2-morpholinopropanone); IRGACURE 2959 (4-(2-hydroxyethoxy)phenyl-(2-hydroxy-2-methylpropyl) ketone). Products identified hereinabove and hereinafter by the IRGACURE and DAROCUR designations are available from Ciba Specialty Chemicals Company The free radical generating component is preferably present in an amount sufficient to effect polymerization of the polymerizable compound upon exposure to sufficient actinic radiation. The polymerization initiator may comprise from about 0.1% to about 50% of the radiation curable ink composition, more preferably from about 0.1 % to about 10 %.

The inks preferably have a pasty consistency with a viscosity of about 4,000 cps or more, preferably from about 10,000 cps and 30,000 cps at 100 s⁻¹ at 25 °C. Such inks are well known in the art and are also readily commercially available. The ink composition is preferably essentially free from water or any volatile organic compounds such as organic solvents, inorganic solvents, and amines. The presence of these unwanted components would cause high layer surface tension, entrapment of air, inconsistency during printing, layer foaming, inability to control viscosity of the layer, as well as evaporation loss. The presence of these volatile component would require constant temperature control and viscosity monitoring. These volatiles also do not allow consistent application to the surface of a substrate at high speeds. Fluidity of the inks and coating are principally from the ethylenically unsaturated component, rather than from any added solvent. While up to a maximum of 10% volatile components may be tolerated, it preferably has less than 1 % volatile components, and more preferably has 0 % volatile components. In order to meet regulatory requirements, the ink should have about 50 parts per billion or less of volatile components.

Electron beam curable inks per se are known in the art and are generally commercially available, such as, for example Sunbeam™ brand electron beam curable inks from Sun Chemical Company of Parsippany, New Jersey, and Inno-Lith EB electron beam curable inks from IdeOn LLC of Hillsborough, New Jersey.

The ink is transferred from the smooth rollers 6 onto a rotatable printing cylinder 2 having an outermost circumference. The outermost circumference has a raised image portion 3 and a non-image portion 5 on and around the outermost circumference of the printing cylinder. The image portion 3 is raised from the outermost circumference of the printing cylinder and at a level higher than the level of the non-image portion 5. In one embodiment the image portion 3 and the non-image portion 5 are integral with the outermost circumference of the printing cylinder 2. In another embodiment, the image portion 3 and the non-image portion 5 are parts of a positive relief plate which is mounted on the outermost circumference of the printing cylinder 2. Such positive relief plates are well known in the art and typically are formed of an elastomeric material having a relief image formed on it surface via well known photographic techniques. Examples include a photopolymer based letterpress or flexographic plate or laser engraved synthetic rubber compound based plate.

The array of smooth rollers 6 apply ink 10 onto the raised image portion 3 on the printing cylinder 2 while substantially not applying ink onto the non-raised, non-image portion 5. The first smooth roller 6 and the second smooth roller 6 are arranged such that when an ink 10 is positioned in the gap between the first smooth roller 6 and the second smooth roller 6, the ink 10 is substantially uniformly dispersed across an outermost circumferential surface of the first smooth roller and said ink is thereafter applied from the outermost circumferential surface of the first smooth roller and then transferred onto the image portion 3 on the printing cylinder 2.

A rotatable counter pressure cylinder 8 is mounted in next to the printing cylinder 2 such that when a web of a substrate material 4 is passed through a gap between the printing cylinder 2 and the counter pressure cylinder 4, and when ink 10 has been applied to the image portion 3 on the printing cylinder 2 from the first smooth roller 6, such ink 10 is transferred from the image portion 3 onto the substrate material 4. Suitable substrates materials non-exclusively include paper, paperboard, metal or polymeric materials such as polyethylene, polypropylene, polyester, polyamide, polyvinyl chloride, or combinations thereof. The ink layer preferably has thickness of from about 1µm to about 3µm.

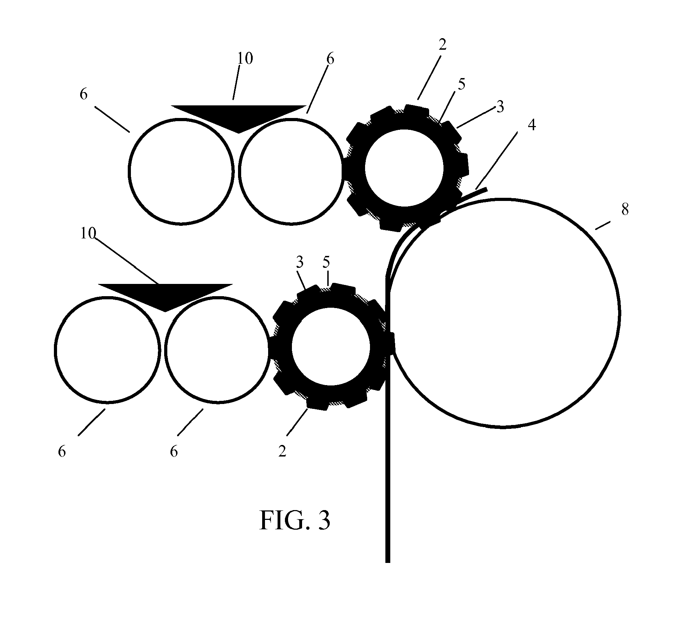

In the embodiment shown in Fig. 2, the printing arrangement comprises an array of rollers which further comprises a third smooth roller 6 mounted for rotation in juxtaposition with the second smooth roller, the second smooth roller 6 and the third smooth roller 6 being arranged such that when an ink 10 is positioned in a gap between the second smooth roller 6 and the third smooth roller 6, the ink 10 is substantially uniformly dispersed across an outermost circumferential surface of the second smooth roller 10 and then said ink is substantially uniformly transferred across an outermost circumferential surface of the first smooth roller 10, and then ink 10 is thereafter transferred from the outermost circumferential surface of the first smooth roller 6 onto the image portion on the printing cylinder 2 for transfer onto substrate material 4. Although the embodiment of Fig. 2 shows two smooth rollers 6, and the embodiment of Fig. 3 shows 3 smooth rollers 6, it is to be understood that any desired number of additional smooth rollers can be used such as by addition of more smooth rollers to the array.

Shown in Fig. 3 is another embodiment of the invention wherein the printing arrangement further comprises an additional rotatable printing cylinder 2 having an outermost circumference with an image portion 3 and a non-image portion 5 on and around the outermost circumference of the additional printing cylinder 2. The additional rotatable printing cylinder 2 has an additional array of rollers 6 for applying an ink onto the image portion on the additional printing cylinder 2. The additional array of rollers comprises additional first smooth roller 6 mounted for rotation in juxtaposition with an additional second printing cylinder 2 and an additional second smooth roller mounted for rotation in juxtaposition with the additional first smooth roller. The additional first smooth roller and the additional second smooth roller are also arranged such that when an ink is positioned in a gap between the additional first smooth roller and the additional second smooth roller, the ink is substantially uniformly dispersed across an outermost circumferential surface of the additional first smooth roller and the ink is thereafter applied from the outermost circumferential surface of the additional first smooth roller onto the image portion on the additional printing cylinder 2. In this embodiment, having an additional rotatable printing cylinder and additional array of smooth rollers, the same counter pressure cylinder 4 and the same substrate material 4 are used. While Fig. 3 shows two additional rotatable printing cylinders and two arrays of smooth rollers, it is understood that any number of additional printing cylinders and arrays of smooth rollers may be employed. Further, additional smooth rollers may be used in a manner like the arrangement of Fig. 2.

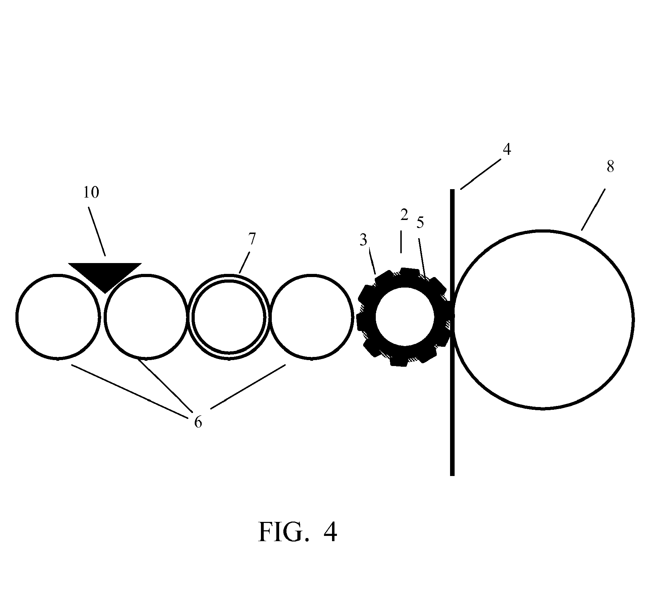

In the embodiment shown in Fig. 4, the printing arrangement comprises an array of rollers which further comprises a third smooth roller 6 mounted for rotation in juxtaposition with the second smooth roller, the second smooth roller 6 and the third smooth roller 6 being arranged such that when an ink 10 is positioned in a gap between the second smooth roller 6 and the third smooth roller 6, the ink 10 is substantially uniformly dispersed across an outermost circumferential surface of the second smooth roller 10. Then the ink is substantially uniformly transferred across an outermost circumferential surface of a roller 7 having a resilient surface. This resilient surface is rubbery and may be composed of a natural rubber or a synthetic rubber. The ink 10 is then substantially uniformly transferred from the resilient roller and substantially uniformly dispersed across an outermost circumferential surface of the first smooth roller 6. The ink 10 is thereafter transferred from the outermost circumferential surface of the first smooth roller 6 onto the image portion on the printing cylinder 2 for transfer onto substrate material 4. Although the embodiment of Fig. 4 shows three smooth rollers 6 and one r4esilient roller 7, and the embodiment of Fig. 3 shows 3 smooth rollers 6, it is to be understood that any desired number of additional smooth rollers and resilient rollers can be used such as by addition of more smooth rollers and resilient rollers to the array. The desired ink characteristics can easily be determined by those skilled in the art.

The invention can be used in various press configurations, including a configuration where multiple arrays of smooth rollers 6 and their corresponding printing cylinder 2 are positioned around a single counter pressure cylinder 8. In another configuration, each printing cylinder 2 has an individual counter pressure cylinder 8, and multiple arrays of smooth rollers 6 and their corresponding printing cylinder 2 are mounted in sequence along a moving web of substrate material in vertical or horizontal directions, or combinations of both vertical and horizontal directions. In another embodiment, multiple arrays of smooth rollers 6 and their corresponding printing cylinder 2 are positioned in opposite direction from a common counter pressure cylinder for printing on both sides of the moving web of substrate material.

In use in each of the foregoing embodiments, the printing cylinders, array of rollers, resilient roller, and counter pressure cylinders each operate independently and preferably all are maintained at a temperature of from about 10 °C to about 60 °C, more preferably from about 15 °C to about 50 °C, and still more preferably from about 20 °C to about 40 °C. All of the rollers preferably have individual electrical drives for speed control and system temperature control. In a preferred embodiment, the smooth rollers in the array, optional resilient roller, printing cylinder and counter pressure roller rotate with synchronized speed for high quality printing.

When the ink is an electron beam curable ink is may be cured using a suitable electron beam source. Suitable electron beam sources may be obtained commercially from Energy Science, Inc. of Wilmington, Mass; Advanced Electron Beams Inc. of Wilmington, Mass., or from PCT Engineering System LLC, Davenport, Iowa. The amount of energy absorbed, also known as the dose, is measured in units of MegaRads (MR or Mrad) or kiloGrays (kGy), where one Mrad is 10 kGy, one kGy being equal to 1,000 Joules per kilogram. The electron beam dose should be within the range of from about 10 kGy to about 40 kGy for essentially complete curing. When exposed to an electron beam, the ethylenically unsaturated component polymerizes or crosslinks. The precursor molecules are excited directly by the ionizing electron beam. Therefore no initiator compounds are required, so no residual volatile organic compounds are present in the finished product. Moreover, curing is substantially instantaneous and provides a cure percentage at or near one hundred percent.

When an ultraviolet radiation (UV) curable ink is used, it may be cured using a suitable ultraviolet radiation source. After application of the UV curable ink onto the substrate material, the UV curable ink composition is exposed to sufficient actinic UV radiation to initiate the polymerization of the ink composition. In one embodiment the polymerization of may be initiated by exposure to radiation having a wavelength of from about 200 nm to about 410 nm, preferably about 260 nm to about 390 nm. In another embodiment, the polymerization of the polymerizable component may be initiated by exposure to ultraviolet radiation, visible radiation, or combinations thereof, by means of a light emitting diode such as those having an emission wavelength of from about 390 nm to about 410 nm, preferably about 400 nm to about 405 nm. The length of time for exposure is easily determinable by those skilled in the art and depends on the selection of the particular components of the radiation-curable composition. Typically exposure ranges from about 1 second to about 60 seconds, preferably from about 2 seconds to about 30 seconds, and more preferably from about 2 seconds to about 15 seconds. Typical exposure intensities range from about 10 mW/cm² to about 600 W/cm², preferably from about 50 mW/cm² to about 450 W/cm², and more preferably from about 100 mW/cm² to about 300 W/cm².

While the present invention has been particularly shown and described with reference to preferred embodiments, it will be readily appreciated by those of ordinary skill in the art that various changes and modifications may be made without departing from the spirit and scope of the invention. It is intended that the claims be interpreted to cover the disclosed embodiment, those alternatives which have been discussed above and all equivalents thereto.

Particular aspects of the invention are:
1. A printing arrangement comprising:
   a) a rotatable printing cylinder having an outermost circumference; an image portion and a non-image portion on and around the outermost circumference of the printing cylinder, the image portion being raised from the outermost circumference of the printing cylinder at a level higher than the level of the non-image portion;
   b) an array of rollers for applying an ink onto the image portion on the printing cylinder while substantially not applying ink onto the non-image portion; the array of rollers comprising a first smooth roller mounted for rotation in juxtaposition with the printing cylinder and a second smooth roller mounted for rotation in juxtaposition with the first smooth roller; the first smooth roller and the second smooth roller being arranged such that when an ink is positioned in a gap between the first smooth roller and the second smooth roller, the ink is substantially uniformly dispersed across an outermost circumferential surface of the first smooth roller and said ink is thereafter applied from the outermost circumferential surface of the first smooth roller onto the image portion on the printing cylinder;
   c) a rotatable counter pressure cylinder mounted in juxtaposition with the printing cylinder such that when a web of a substrate material is passed through a gap between the printing cylinder and the counter pressure cylinder, and when ink has been applied to the image portion on the printing cylinder from the first smooth roller, such ink is transferred from the image portion onto the substrate material.
2. The printing arrangement according to aspect 1 wherein the image portion and the non-image portion are integral with the outermost circumference of the printing cylinder.
3. The printing arrangement according to apect 1 wherein the image portion and the non-image portion are parts of a positive relief plate, which positive relief plate is mounted on the outermost circumference of the printing cylinder.
4. The printing arrangement according to aspect 3 wherein the positive relief plate comprises an elastomer.
5. The printing arrangement according to aspect 1 wherein the array of rollers further comprises a third smooth roller mounted for rotation in juxtaposition with the second smooth roller, the second smooth roller and the third smooth roller being arranged such that when an ink is positioned in a gap between the second smooth roller and the third smooth roller, the ink is substantially uniformly dispersed across an outermost circumferential surface of the second smooth roller and then said ink is substantially uniformly dispersed across an outermost circumferential surface of the first smooth roller, and then said ink is thereafter applied from the outermost circumferential surface of the first smooth roller onto the image portion on the printing cylinder.
6. The printing arrangement according to aspect 5 further comprising a roller having a resilient surface positioned between the first smooth roller and the second smooth roller such that after the ink is substantially uniformly dispersed across an outermost circumferential surface of the second smooth roller, the ink is then said ink is substantially uniformly dispersed across an outermost circumferential surface of the resilient roller, and then the ink is substantially uniformly dispersed across an outermost circumferential surface of the first smooth roller.
7. The printing arrangement according to aspect 1 further comprising
   a) an additional rotatable printing cylinder having an outermost circumference; an image portion and a non-image portion on and around the outermost circumference of the additional printing cylinder, the image portion being raised from the outermost circumference of the additional printing cylinder at a level higher than the level of the non-image portion;
   b) an additional array of rollers for applying an ink onto the image portion on the additional printing cylinder while substantially not applying ink onto the non-image portion; the additional array of rollers comprising an additional first smooth roller mounted for rotation in juxtaposition with an additional second printing cylinder mounted for rotation in juxtaposition with the additional first smooth roller; the additional first smooth roller and an additional second smooth roller being arranged such that when an ink is positioned in a gap between the additional first smooth roller and the additional second smooth roller, the ink is substantially uniformly dispersed across an outermost circumferential surface of the additional first smooth roller and said ink is thereafter applied from the outermost circumferential surface of the additional first smooth roller onto the image portion on the additional printing cylinder;
   c) wherein the counter pressure cylinder is mounted in juxtaposition with the additional printing cylinder such that when a web of a substrate material is passed through a gap between the additional printing cylinder and the counter pressure cylinder, and when ink has been applied to the image portion on the additional printing cylinder from the additional first smooth roller, such ink is transferred from the image portion of the additional printing cylinder onto the substrate material.
8. The printing arrangement according to aspect 7 wherein the additional array of rollers further comprises an additional third smooth roller mounted for rotation in juxtaposition with the additional second smooth roller, the additional second smooth roller and the additional third smooth roller being arranged such that when an ink is positioned in a gap between the additional second smooth roller and the additional third smooth roller, the ink is substantially uniformly dispersed across an outermost circumferential surface of the additional second smooth roller and then said ink is substantially uniformly dispersed across an outermost circumferential surface of the additional first smooth roller, and then said ink is thereafter applied from the outermost circumferential surface of the first smooth roller onto the image portion on the additional printing cylinder.
9. The printing arrangement according to aspect 7 wherein the image portion and the non-image portion are integral with the outermost circumference of the additional printing cylinder.
10. The printing arrangement according to aspect 7 wherein the image portion and the non-image portion are parts of a positive relief plate, which positive relief plate is mounted on the outermost circumference of the additional printing cylinder.
11. The printing arrangement according to aspect 10 wherein the additional positive relief plate comprises an elastomer.
12. The printing arrangement according to aspect 10 wherein the first smooth roller is an anilox roller.
13. A method for imagewise printing an ink onto a moving web of a substrate material comprising:
   I) providing a printing arrangement comprising:
      a) a rotatable printing cylinder having an outermost circumference; an image portion and a non-image portion on and around the outermost circumference of the printing cylinder, the image portion being raised from the outermost circumference of the printing cylinder at a level higher than the level of the non-image portion;
      b) an array of rollers for applying an ink onto the image portion on the printing cylinder while substantially not applying ink onto the non-image portion; the array of rollers comprising a first smooth roller mounted for rotation in juxtaposition with the printing cylinder and a second smooth roller mounted for rotation in juxtaposition with the first smooth roller; the first smooth roller and the second smooth roller being arranged such that when an ink is positioned in a gap between the first smooth roller and the second smooth roller, the ink is substantially uniformly dispersed across an outermost circumferential surface of the first smooth roller and said ink is thereafter applied from the outermost circumferential surface of the first smooth roller onto the image portion on the printing cylinder;
      c) a rotatable counter pressure cylinder mounted in juxtaposition with the printing cylinder such that when a web of a substrate material is passed through a gap between the printing cylinder and the counter pressure cylinder, and when ink has been applied to the image portion on the printing cylinder from the first smooth roller, such ink is transferred from the image portion onto the substrate material;
   II) positioning an ink positioned in a gap between the first smooth roller and the second smooth roller;
   III) passing a moving web of a substrate material through a gap between the printing cylinder and the counter pressure cylinder thereby transferring the ink from the image portion onto the substrate material.
14. The method according to aspect 13 wherein the image portion and the non-image portion are integral with the outermost circumference of the printing cylinder.
15. The method according to aspect 13 wherein the image portion and the non-image portion are parts of a positive relief plate, which positive relief plate is mounted on the outermost circumference of the printing cylinder.
16. The method according to aspect 13 wherein the positive relief plate comprises an elastomer.
17. The method according to aspect 13 wherein the array of rollers further comprises a third smooth roller mounted for rotation in juxtaposition with the second smooth roller, the second smooth roller and the third smooth roller being arranged such that when an ink is positioned in a gap between the second smooth roller and the third smooth roller, the ink is substantially uniformly dispersed across an outermost circumferential surface of the second smooth roller and then said ink is substantially uniformly dispersed across an outermost circumferential surface of the first smooth roller, and then said ink is thereafter applied from the outermost circumferential surface of the first smooth roller onto the image portion on the printing cylinder.
18. The method according to aspect 13 wherein the printing arrangement further comprises:
   a) an additional rotatable printing cylinder having an outermost circumference; an image portion and a non-image portion on and around the outermost circumference of the additional printing cylinder, the image portion being raised from the outermost circumference of the additional printing cylinder at a level higher than the level of the non-image portion;
   b) an additional array of rollers for applying an ink onto the image portion on the additional printing cylinder while substantially not applying ink onto the non-image portion; the additional array of rollers comprising an additional first smooth roller mounted for rotation in juxtaposition with the additional second printing cylinder and an additional smooth roller mounted for rotation in juxtaposition with the additional first smooth roller; the additional first smooth roller and the additional second smooth roller being arranged such that when an ink is positioned in a gap between the additional first smooth roller and the additional second smooth roller, the ink is substantially uniformly dispersed across an outermost circumferential surface of the additional first smooth roller and said ink is thereafter applied from the outermost circumferential surface of the additional first smooth roller onto the image portion on the additional printing cylinder;
   c) wherein the counter pressure cylinder is mounted in juxtaposition with the additional printing cylinder such that when a web of a substrate material is passed through a gap between the additional printing cylinder and the counter pressure cylinder, and when ink has been applied to the image portion on the additional printing cylinder from the additional first smooth roller, such ink is transferred from the image portion of the additional printing cylinder onto the substrate material.
19. The method according to aspect 18 wherein the additional array of rollers further comprises an additional third smooth roller mounted for rotation in juxtaposition with the additional second smooth roller, the additional second smooth roller and the additional third smooth roller being arranged such that when an ink is positioned in a gap between the additional second smooth roller and the additional third smooth roller, the ink is substantially uniformly dispersed across an outermost circumferential surface of the additional second smooth roller and then said ink is substantially uniformly dispersed across an outermost circumferential surface of the additional first smooth roller, and then said ink is thereafter applied from the outermost circumferential surface of the first smooth roller onto the image portion on the additional printing cylinder.
20. The method according to aspect 18 wherein the image portion and the non-image portion are integral with the outermost circumference of the additional printing cylinder.
21. The method according to aspect 18 wherein the image portion and the non-image portion are parts of a positive relief plate, which positive relief plate is mounted on the outermost circumference of the additional printing cylinder.
22. The method according to aspect 21 wherein the additional positive relief plate comprises an elastomer.

## Claims

1. A printing arrangement comprising:
a) a rotatable printing cylinder having an outermost circumference; an image portion and a non-image portion on and around the outermost circumference of the printing cylinder, the image portion being raised from the outermost circumference of the printing cylinder at a level higher than the level of the non-image portion;
b) an array of rollers for applying an ink onto the image portion on the printing cylinder while substantially not applying ink onto the non-image portion; the array of rollers comprising a first smooth roller mounted for rotation in juxtaposition with the printing cylinder and a second smooth roller mounted for rotation in juxtaposition with the first smooth roller; the first smooth roller and the second smooth roller being arranged such that when an ink is positioned in a gap between the first smooth roller and the second smooth roller, the ink is substantially uniformly dispersed across an outermost circumferential surface of the first smooth roller and said ink is thereafter applied from the outermost circumferential surface of the first smooth roller onto the image portion on the printing cylinder;
c) a rotatable counter pressure cylinder mounted in juxtaposition with the printing cylinder such that when a web of a substrate material is passed through a gap between the printing cylinder and the counter pressure cylinder, and when ink has been applied to the image portion on the printing cylinder from the first smooth roller, such ink is transferred from the image portion onto the substrate material.

2. The printing arrangement according to claim 1 wherein the image portion and the non-image portion are integral with the outermost circumference of the printing cylinder.

3. The printing arrangement according to claim 1 or 2 wherein the image portion and the non-image portion are parts of a positive relief plate, which positive relief plate is mounted on the outermost circumference of the printing cylinder.

4. The printing arrangement according to claim 1, 2 or 3 wherein the array of rollers further comprises a third smooth roller mounted for rotation in juxtaposition with the second smooth roller, the second smooth roller and the third smooth roller being arranged such that when an ink is positioned in a gap between the second smooth roller and the third smooth roller, the ink is substantially uniformly dispersed across an outermost circumferential surface of the second smooth roller and then said ink is substantially uniformly dispersed across an outermost circumferential surface of the first smooth roller, and then said ink is thereafter applied from the outermost circumferential surface of the first smooth roller onto the image portion on the printing cylinder.

5. The printing arrangement according to claim 4 further comprising a roller having a resilient surface positioned between the first smooth roller and the second smooth roller such that after the ink is substantially uniformly dispersed across an outermost circumferential surface of the second smooth roller, the ink is then said ink is substantially uniformly dispersed across an outermost circumferential surface of the resilient roller, and then the ink is substantially uniformly dispersed across an outermost circumferential surface of the first smooth roller.

6. The printing arrangement according to any of the preceding claims further comprising
a) an additional rotatable printing cylinder having an outermost circumference; an image portion and a non-image portion on and around the outermost circumference of the additional printing cylinder, the image portion being raised from the outermost circumference of the additional printing cylinder at a level higher than the level of the non-image portion;
b) an additional array of rollers for applying an ink onto the image portion on the additional printing cylinder while substantially not applying ink onto the non-image portion; the additional array of rollers comprising an additional first smooth roller mounted for rotation in juxtaposition with an additional second printing cylinder mounted for rotation in juxtaposition with the additional first smooth roller; the additional first smooth roller and an additional second smooth roller being arranged such that when an ink is positioned in a gap between the additional first smooth roller and the additional second smooth roller, the ink is substantially uniformly dispersed across an outermost circumferential surface of the additional first smooth roller and said ink is thereafter applied from the outermost circumferential surface of the additional first smooth roller onto the image portion on the additional printing cylinder;
c) wherein the counter pressure cylinder is mounted in juxtaposition with the additional printing cylinder such that when a web of a substrate material is passed through a gap between the additional printing cylinder and the counter pressure cylinder, and when ink has been applied to the image portion on the additional printing cylinder from the additional first smooth roller, such ink is transferred from the image portion of the additional printing cylinder onto the substrate material.

7. The printing arrangement according to claim 6 wherein the additional array of rollers further comprises an additional third smooth roller mounted for rotation in juxtaposition with the additional second smooth roller, the additional second smooth roller and the additional third smooth roller being arranged such that when an ink is positioned in a gap between the additional second smooth roller and the additional third smooth roller, the ink is substantially uniformly dispersed across an outermost circumferential surface of the additional second smooth roller and then said ink is substantially uniformly dispersed across an outermost circumferential surface of the additional first smooth roller, and then said ink is thereafter applied from the outermost circumferential surface of the first smooth roller onto the image portion on the additional printing cylinder.

8. The printing arrangement according to claim 6 wherein the image portion and the non-image portion are integral with the outermost circumference of the additional printing cylinder.

9. The printing arrangement according to claim 6 wherein the image portion and the non-image portion are parts of a positive relief plate, which positive relief plate is mounted on the outermost circumference of the additional printing cylinder.

10. The printing arrangement according to claim 9 wherein the first smooth roller is an anilox roller.

11. A method for imagewise printing an ink onto a moving web of a substrate material comprising:
I) providing a printing arrangement comprising:
a) a rotatable printing cylinder having an outermost circumference; an image portion and a non-image portion on and around the outermost circumference of the printing cylinder, the image portion being raised from the outermost circumference of the printing cylinder at a level higher than the level of the non-image portion;
b) an array of rollers for applying an ink onto the image portion on the printing cylinder while substantially not applying ink onto the non-image portion; the array of rollers comprising a first smooth roller mounted for rotation in juxtaposition with the printing cylinder and a second smooth roller mounted for rotation in juxtaposition with the first smooth roller; the first smooth roller and the second smooth roller being arranged such that when an ink is positioned in a gap between the first smooth roller and the second smooth roller, the ink is substantially uniformly dispersed across an outermost circumferential surface of the first smooth roller and said ink is thereafter applied from the outermost circumferential surface of the first smooth roller onto the image portion on the printing cylinder;
c) a rotatable counter pressure cylinder mounted in juxtaposition with the printing cylinder such that when a web of a substrate material is passed through a gap between the printing cylinder and the counter pressure cylinder, and when ink has been applied to the image portion on the printing cylinder from the first smooth roller, such ink is transferred from the image portion onto the substrate material;
II) positioning an ink positioned in a gap between the first smooth roller and the second smooth roller;
III) passing a moving web of a substrate material through a gap between the printing cylinder and the counter pressure cylinder thereby transferring the ink from the image portion onto the substrate material.

12. The method according to claim 11 wherein the image portion and the non-image portion are integral with the outermost circumference of the printing cylinder.

13. The method according to claim 11 wherein the image portion and the non-image portion are parts of a positive relief plate, which positive relief plate is mounted on the outermost circumference of the printing cylinder.

14. The method according to claim 11 wherein the array of rollers further comprises a third smooth roller mounted for rotation in juxtaposition with the second smooth roller, the second smooth roller and the third smooth roller being arranged such that when an ink is positioned in a gap between the second smooth roller and the third smooth roller, the ink is substantially uniformly dispersed across an outermost circumferential surface of the second smooth roller and then said ink is substantially uniformly dispersed across an outermost circumferential surface of the first smooth roller, and then said ink is thereafter applied from the outermost circumferential surface of the first smooth roller onto the image portion on the printing cylinder.

15. The method according to claim 11 wherein the printing arrangement further comprises:
a) an additional rotatable printing cylinder having an outermost circumference; an image portion and a non-image portion on and around the outermost circumference of the additional printing cylinder, the image portion being raised from the outermost circumference of the additional printing cylinder at a level higher than the level of the non-image portion;
b) an additional array of rollers for applying an ink onto the image portion on the additional printing cylinder while substantially not applying ink onto the non-image portion; the additional array of rollers comprising an additional first smooth roller mounted for rotation in juxtaposition with the additional second printing cylinder and an additional smooth roller mounted for rotation in juxtaposition with the additional first smooth roller; the additional first smooth roller and the additional second smooth roller being arranged such that when an ink is positioned in a gap between the additional first smooth roller and the additional second smooth roller, the ink is substantially uniformly dispersed across an outermost circumferential surface of the additional first smooth roller and said ink is thereafter applied from the outermost circumferential surface of the additional first smooth roller onto the image portion on the additional printing cylinder;
c) wherein the counter pressure cylinder is mounted in juxtaposition with the additional printing cylinder such that when a web of a substrate material is passed through a gap between the additional printing cylinder and the counter pressure cylinder, and when ink has been applied to the image portion on the additional printing cylinder from the additional first smooth roller, such ink is transferred from the image portion of the additional printing cylinder onto the substrate material.

16. The method according to claim 15 wherein the additional array of rollers further comprises an additional third smooth roller mounted for rotation in juxtaposition with the additional second smooth roller, the additional second smooth roller and the additional third smooth roller being arranged such that when an ink is positioned in a gap between the additional second smooth roller and the additional third smooth roller, the ink is substantially uniformly dispersed across an outermost circumferential surface of the additional second smooth roller and then said ink is substantially uniformly dispersed across an outermost circumferential surface of the additional first smooth roller, and then said ink is thereafter applied from the outermost circumferential surface of the first smooth roller onto the image portion on the additional printing cylinder.
